# EUROPEAN PATENT APPLICATION

(11) **EP 4 667 169 A1**
(43) Date of publication of application: **24.12.2025**
(21) Application number: 25181450.5
(22) Date of filing: 06.06.2025
(51) Int. Cl.: B25J 9/16

(54) **MACHINE LEARNING POWERED AUTONOMOUS AGENT SYSTEM FOR COMPETENCY SELF-ASSESSMENT AND IMPROVEMENT**

(30) Priority: 17.06.2024 US 202418745015
(71) Applicant: RTX Corporation, Farmington, CT 06032 (US)
(72) Inventor: STRAMANDINOLI, Francesca, Farmington, 06032 (US); SARKAR, Soumalya, Farmington, 06032 (US); REDDY, Kishore K., Farmington, 06032 (US)
(74) Representative: Dehns

(57) **Abstract**

A system for controlling a tool includes a tool operable to perform tasks. A control for the tool includes processing circuitry for using machine learning to improve operation of the tool, and having access to a memory with stored data. The processing circuitry is operable to communicate with a user interface, and the user interface is operable to provide a prompt for a desired action to the control. The control is operable to break the received prompt into a plurality of sub-steps, communicate with the stored data, and make a determination as to whether the control is competent to perform each of the sub-steps. The control is operable to control the tool to perform one of the sub-steps if it has determined it is competent and to communicate to other information if it determines it is not competent to perform any others of the sub-steps. A method is also disclosed.

## Description

### BACKGROUND

This application relates to a machine control that is operable to receive a task, and break the task into sub-steps. The machine control is operable to evaluate its competency to perform each of the sub-steps, perform those where it finds it is competent, and seek additional information where it determines it is not competent. A method for operating such a system is also disclosed.

Any number of machine systems are being controlled by electronic controls, and with machine learning capability to improve the control.

One particular type of machine learning system is a large language model learning system. Such systems control a machine in a manner which is improved by the machine learning over time.

It is known for such controls to receive a command for the machine, and break the command into a series of sub-steps for performing the command. The control then is operable to control the machine to control the sub-steps. However, in many cases the control identifies a way of achieving the sub-step which is not plausible or workable.

### SUMMARY

According to a first aspect, a system for controlling a tool includes a tool operable to perform tasks. A control for the tool includes processing circuitry for using machine learning to improve operation of the tool, and having access to a memory with stored data. The processing circuitry is operable to communicate with a user interface, and the user interface is operable to provide a prompt for a desired action to the control. The control is operable to break the received prompt into a plurality of sub-steps, communicate with the stored data, and make a determination as to whether the control is competent to perform each of the sub-steps. The control is operable to control the tool to perform one of the sub-steps if it has determined it is competent and to communicate to other information if it determines it is not competent to perform any others of the sub-steps.

In an embodiment according to the previous embodiment, the control includes a large language model.

In another embodiment according to any of the previous embodiments, an autonomous agent is operable to communicate with the large language model.

In another embodiment according to any of the previous embodiments, the tool is a robot.

In another embodiment according to any of the previous embodiments, the large language model is operable to break the task into the plurality of sub-steps.

In another embodiment according to any of the previous embodiments, a simulation tool is operable to receive a proposed action from the large language model once the control has queried the other information to determine a proposed way to perform the sub-step for which the control has determined it lacks competency, and to communicate with the autonomous agent to perform the step if the simulation tool indicates that a satisfactory result would be achieved.

In another embodiment according to any of the previous embodiments, the system is operable to communicate back to the user interface to ask additional information should its contact with the other information does not provide an adequate result for the step where it has been determined to lack competency.

According to a second aspect, a method for controlling a tool includes providing a tool operable to perform tasks. The tool is controlled through processing circuitry and uses machine learning to improve control of the tool, and has access to a memory with stored data. A prompt is provided in a user interface for a desired action to the control. The control is operable to break the received prompt into a plurality of sub-steps, communicate with the stored data, and make a determination as to whether the control is competent to perform each of the sub-steps. The tool is controlled to perform one of the sub-steps if it has determined it is competent and to communicate to other information if it determines it is not competent to perform any other of the sub-steps.

In another embodiment according to any of the previous embodiments, the control includes a large language model.

In another embodiment according to any of the previous embodiments, an autonomous agent communicates with the large language model.

In another embodiment according to any of the previous embodiments, the tool is a robot.

In another embodiment according to any of the previous embodiments, the large language model breaks the task into the plurality of sub-steps.

In another embodiment according to any of the previous embodiments, a simulation tool receives a proposed action from the large language model once the control has queried the other information to determine a proposed way to perform the sub-step for which it has determined it lacks competency, and to communicate with the autonomous agent to perform the step if the simulation tool indicates that a satisfactory result would be achieved.

In another embodiment according to any of the previous embodiments, the method further includes communicating back to the user interface to ask additional information should contact by the control with the other information does not provide an adequate result for the sub-step where the control has been determined to lack competency.

The present disclosure may include any one or more of the individual features disclosed above and/or below alone or in any combination thereof.

### BRIEF DESCRIPTION OF THE DRAWINGS

Certain aspects and embodiments of the present invention will now be described by way of example only and with reference to the non-limiting appended drawings, in which:
Figure 1 schematically shows a machine and control along with an operator interface;
Figure 2 schematically shows a breakdown of a received command into a plurality of sub-steps, and how the control may go about achieving those sub-steps. Figures 2A and 2B break Figure 2 into larger images;
Figure 3 schematically shows a breakdown of an alternative received command into a plurality of sub-steps, and how the control may go about achieving those sub-steps. Figures 3A and 3B break Figure 3 into larger images;
Figure 4 is an example flow chart; and
Figure 5 shows an example control.

### DETAILED DESCRIPTION

This disclosure relates to a machine learning powered autonomous agent system that is operable to break down large tasks into smaller and more manageable sub tasks. The autonomous agent is also provided with a long-term memory, such that the agent has the capability to retain and recall information over extended periods. The agent is also operable to reason on its acts and possibilities given its embodiment limitations, and identify uncertainty in its competency.

The agent is provided with the ability to access a database to find additional information to perform a sub-step where it has limited confidence in its ability to perform the sub-step, and then learn to improve its operation to perform the sub-step. The disclosed techniques limit a likelihood that the agent may hallucinate, which occurs when a system confidently generates outputs that may be plausible but are incorrect and untethered from reality. Accordingly, the disclosed techniques may reduce a likelihood of an undesirable outcome that occur due to over-confidence in performing the sub-step. For purposes of this application the "database" may also be broadly interpreted to include the internet, or other information sources remote from the system.

The benefits of the disclosed system and method include allowing human users to communicate with robots, or other machines, in an intuitive and convenient manner. Enabling robots to adapt to different tasks and environments, enabling robots to process different forms of inputs such as speech, images, and text simultaneously and allowing robots to reason on their own capabilities and retrieve relevant knowledge for continuous self-improvement.

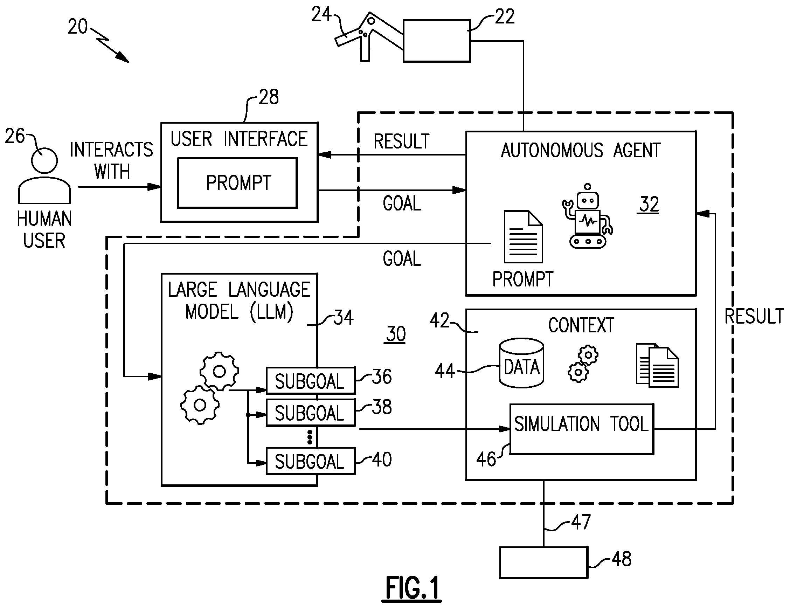

Figure 1 schematically shows a system 20 for controlling a tool 22 that is shown here as a robot having a robot gripper 24. The system 20 may be utilized to control other robotic configurations and tools. A human 26 interacts with a (e.g., graphical) user interface 28 to provide a prompt to a control 30. The control 30 has an autonomous agent 32. The control 30 also includes a machine learning module disclosed here as a large language model 34. The large language model 34 is operable to receive a received prompt from the interface 28, through the agent 32, and break performance of that task into a plurality of sub goals (e.g., sub-steps) 36, 38, 40. Of course, in operation there may be many more sub-steps.

The model 34 communicates with a "context" (e.g., module) 42 that would include memory with a database 44 and a simulation tool 46. The context 42 communicates back to the autonomous agent 32. The context also has a branch 47 which may communicate with the internet, or other outside source(s) of information 48.

As mentioned above, the control 30 is operable to determine for each of the sub goals 36, 38, 40 whether the autonomous agent 32 has sufficient information such that it can be confident it will properly perform the sub goal.

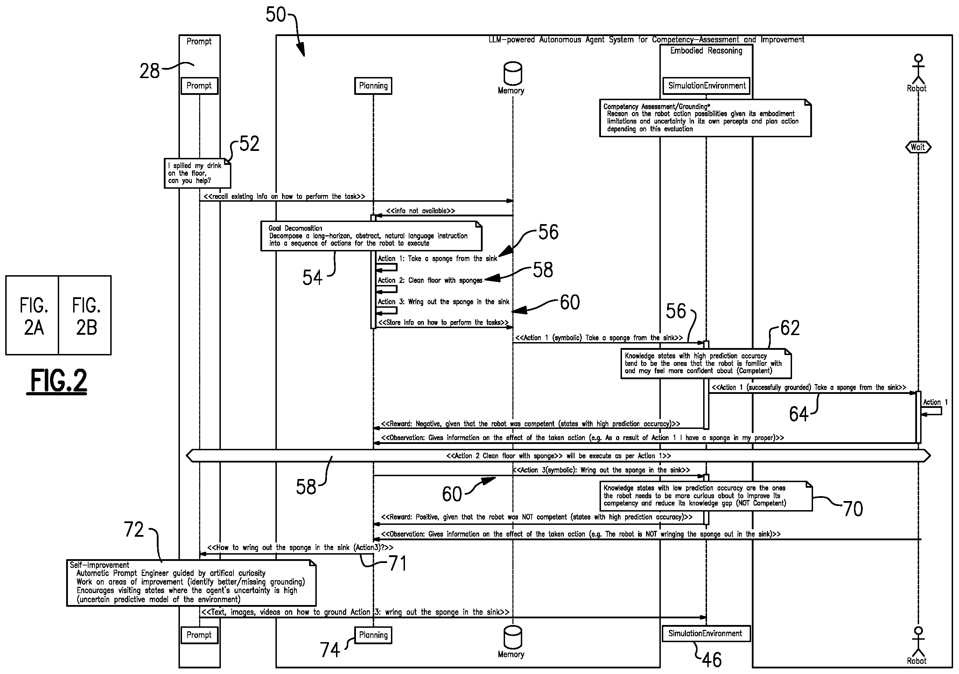

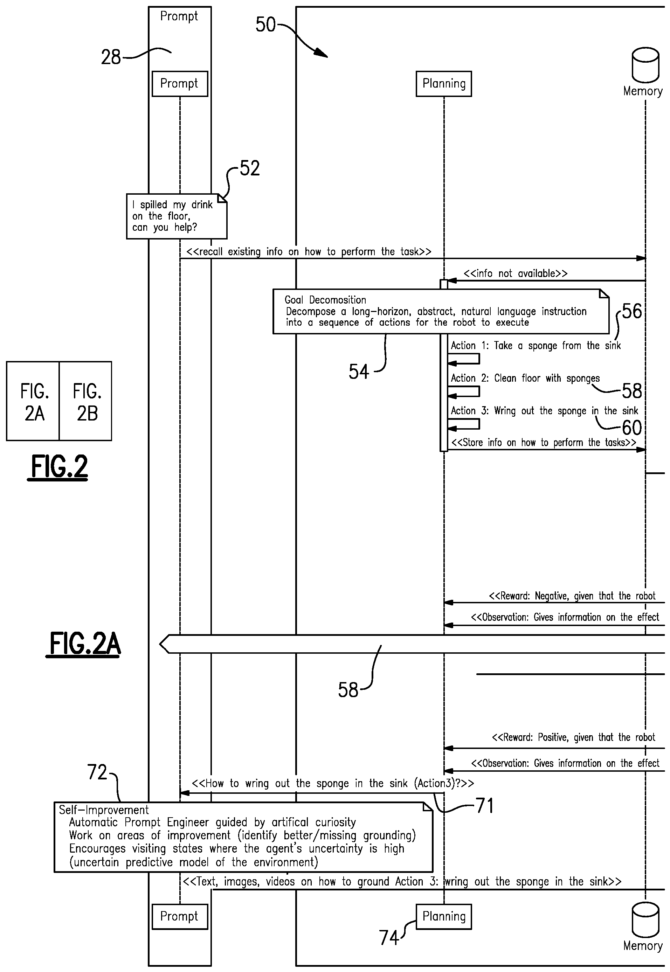

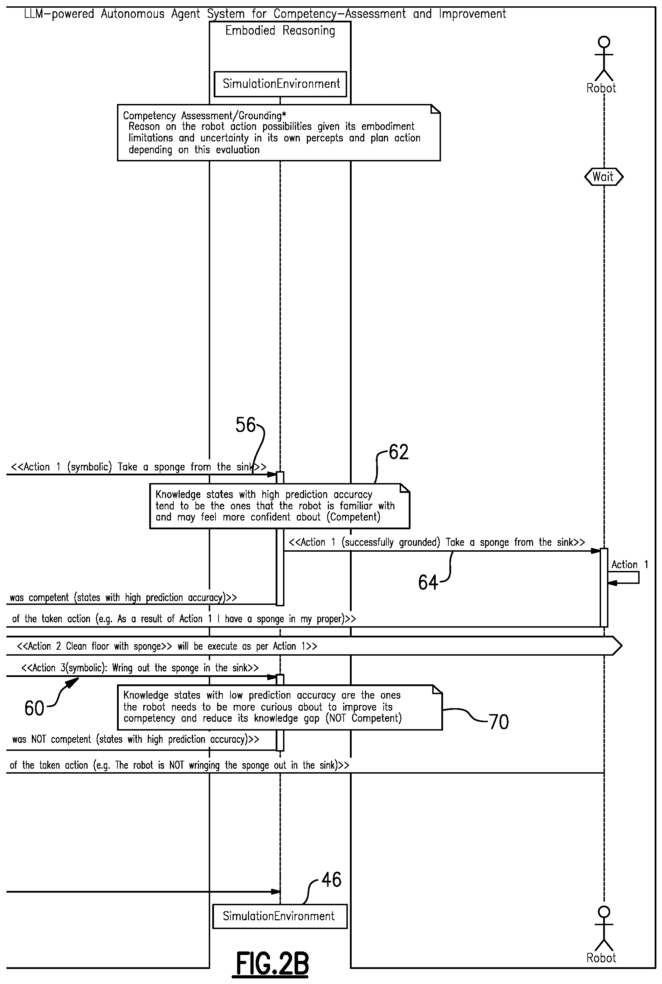

As shown schematically at 50 in Figure 2, a prompt 52 is sent to the control 30. For purposes of this disclosure the prompt is taken as a simple command 52, "I spilled my drink on the floor, can you help?" The prompt here is shown as a trivial prompt to aid in understanding the relatively complex operation occurring in the system, and different and/or more complex prompts may be evaluated in accordance with the teachings disclosed herein.

The first step is goal decomposition at 54. Here, the prompt 52 is broken into a number of sub-steps or sub goals 56, 58, 60. The first step 56 is to take a sponge from a sink. The second step 58 is to clean the floor with the sponge. The third step 60 is to wring out the sponge in the sink. For improving the readability of Figure 2, it is also broken into Figures 2A and 2B, which sit side by side.

Action 1, taking the sponge from the sink 56 is evaluated. The control recognizes at 62 that it has high prediction accuracy, as the agent 32 is familiar with this step and determines it is confident about completing the step. The step is then taken at step 64, and the robot 22 now has a sponge from the sink in the gripper hand 24.

To determine the confidence level, the simulation tool 46 may be utilized to simulate completion of the task based upon the current knowledge state. Here the simulation indicates that the step would be successfully performed based upon the current knowledge.

The next step 58, Action 2, is also a step that the agent 32 has confidence to perform. Thus, the floor is cleaned with the sponge.

However, as to step 60, Action 3, the agent 32 recognizes at 70 that it has low prediction accuracy. Again, the evaluation may include running a simulation to reach the determination. The system 50 needs to be curious about the step to improve its competency and reduce a knowledge gap. Thus, at 71, autonomous agent 32 seeks additional information at 72. The additional information may be internal and/or external to the system 50.

The additional information is initially sought from stored data such as data 44. The control, and in particular, the agent 32 is guided by artificial curiosity to work on areas of improvement to identify better information, and missing information. This may include seeking additional information where the agent's 32 uncertainty is high.

The information can be sought on stored database 44 and/or another information source such as the internet 48. Collectively these can be called a "database." Once this has been obtained the agent 32 may move to the simulation tool 46 in context 52 to simulate performance of the sub-step 60 and evaluate its results. If the result is acceptable, then step 60 can be performed. However, if the result is not acceptable, then the agent 32 may return to the user interface 28 and ask the user for assistance.

The identification of whether or not the system 20 is competent to perform any of the steps may be based upon how often such step has been performed in the past. As an example, if the system has performed a sub-step only once, it may identify a potential lack of confidence. If the system has performed the sub-step a number of times then it may be relatively more confident in performing the sub-step.

The identification of whether or not the system is competent to perform any of the steps may be based upon a mathematical problem formulation representing an optimal path of sequential decisions in an uncertain environment (i.e., simulated environment). At each step of the sequence, the agent decides on performing an action to move to the next state, that should bring the agent closer to the achievement of the final goal state. According to the current state, some rewards are available to get either positive gains or negative costs.

When knowledge states have high prediction accuracy (i.e., the outcome of an action can be predicted with high accuracy), the agent is less rewarded/motivated to explore, and it is ready to execute the action grounded in the physical world (Competent).

When knowledge states have low prediction accuracy (i.e., high uncertainty), the agent is more rewarded/motivated to seek information that can help improve its competency and reduce its knowledge gap (Not Competent).

Hence, a curiosity-driven prompting algorithm encourages visiting knowledge states where uncertainty is high. The more the agent is competent, the less it needs to be curious.

The agent 32 may incorporate a reward function for improving competency. In programming the control 30, the agent 32 is provided with a lower reward, given that the robot was competent as to steps 56 and 58. On the other hand, as to sub-step 60 the reward is higher given that the robot is not competent. This results in the agent 32 being less rewarded/motivated to explore additional information when a determination is made that it is already competent, and more rewarded/motivated to seek information that can improve its competency and reduce its knowledge gap when it has determined it is less competent.

The information sought to improve competency may include text information, video information, or any type of information. As examples, the agent 32 may use a video to improve knowledge on how to wring a sponge, or perhaps audio description on how to do so may be used.

As described above, while the method has been explained with regard to a simple task for cleaning a spill, in fact such a method and system can provide control over very complex operations. As an example, the system and control has applicability to maintenance repair and overhaul of very complex systems, autonomous visual inspection, manufacturing, smart factory and logistic product enhancements.

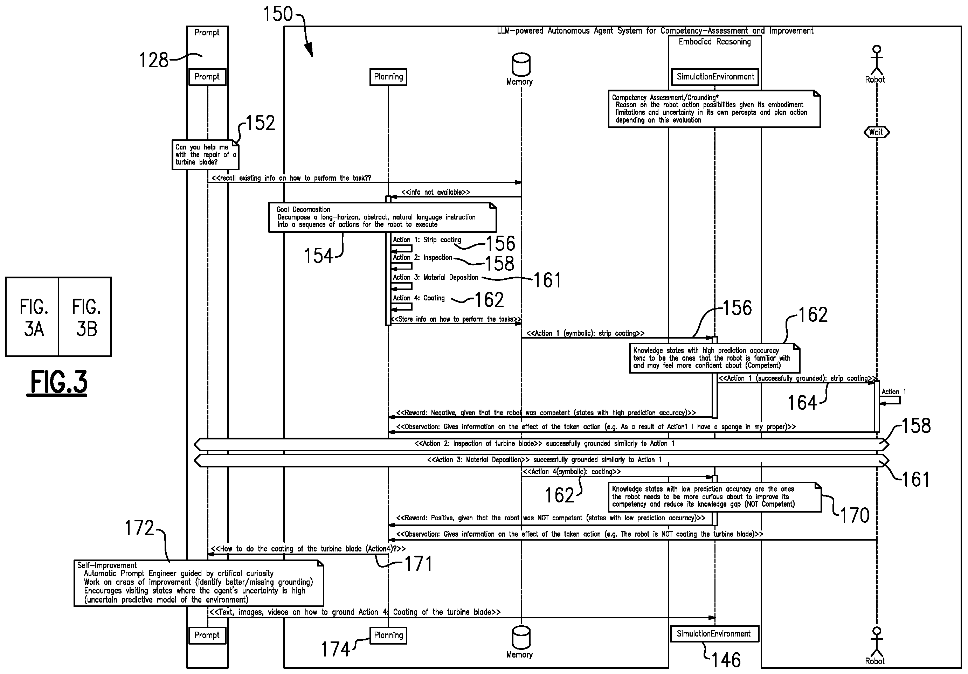

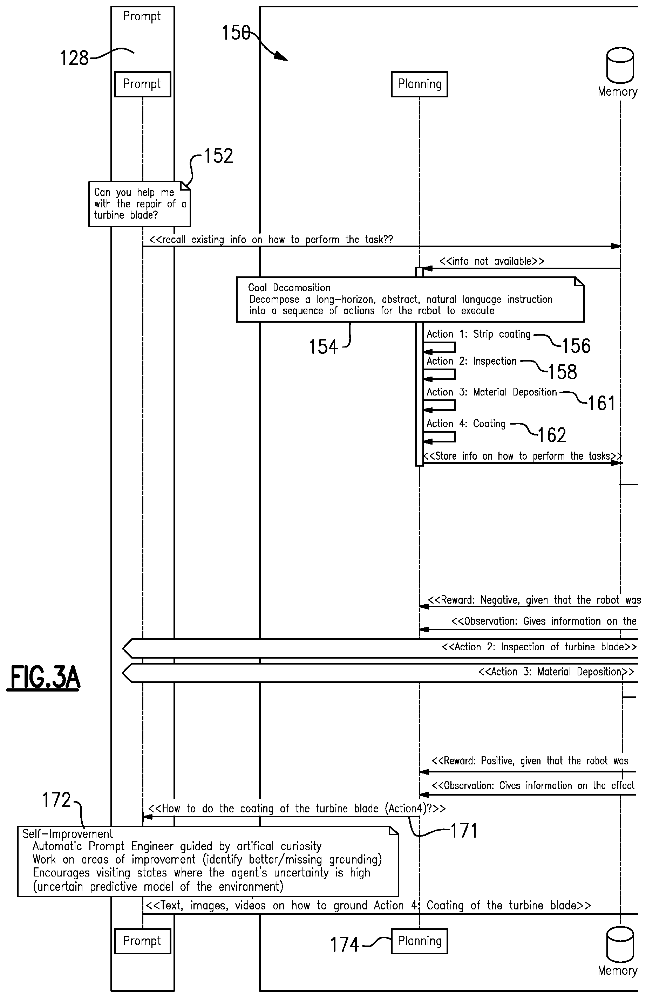

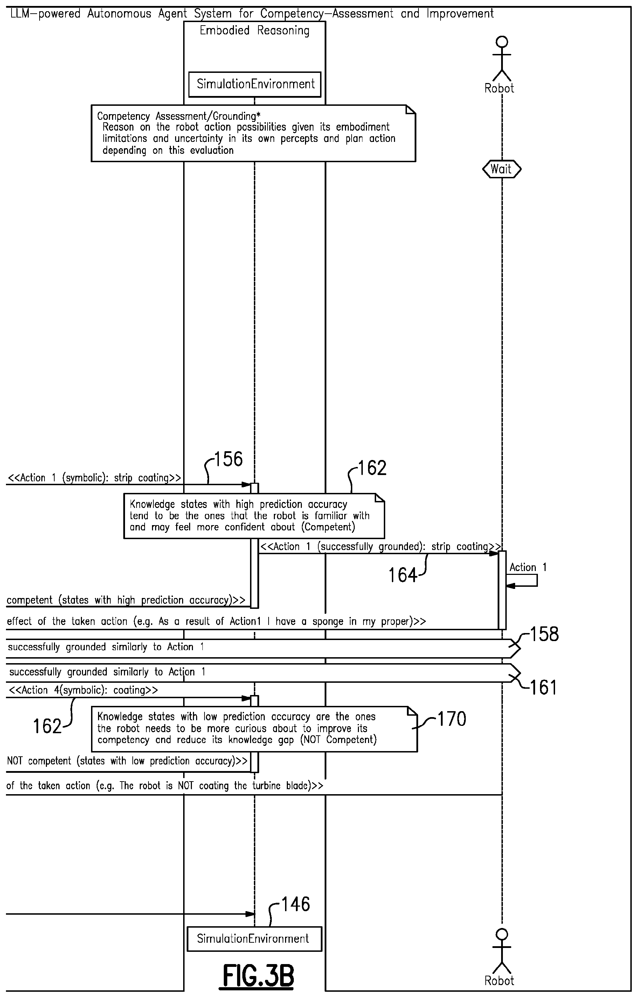

Figure 3 shows a system 150 performing another prompted task, and namely "Can you help me with the repair of a turbine blade?" Here, again Figure 3 is broken into Figures 3A and 3B to simplify review.

Reference numerals that are similar to the Figure 2 method and system are repeated here with a 1 before them. The prompt 128 is shown at 152. There is goal decomposition at step 154, here into four sub-steps, namely strip the coating 156, inspection 158, material deposition 161 and coating 162. In real world practice each of these sub-steps may have several other sub-steps.

As shown at 156, the strip coating sub-step is considered at 162. The agent 32 determines it has high predicted accuracy, and thus at step 164 it controls the robot 22 to perform strip coating. This determination may include running a simulation. Notably, the robot 22 illustrated in Figure 1 is highly schematic, and many other types of robots with tools other than gripper hands, would benefit from this disclosure.

Steps 158 and 161 are considered, and again the agent 32 determines it is competent to perform those steps. Again, a simulation may be ran to make these determinations. The steps 158 and 161 are then performed.

The step 162, namely coating, is considered at step 170, and the agent 32 determines it has low prediction accuracy. A simulation may be ran to reach this determination. Thus, at step 171 it consults, as in the Figure 2 embodiment, to retrieve additional information for self-improvement at step 172. Planning step 164 again occurs. At step 146 the retrieved information may be sent to a simulation environment (e.g., tool) 46 to determine whether the retrieved information provides the agent 32 with sufficient knowledge that it can properly control the robot 22. If so, then step 162 is performed. If not, then the system 150 may seek additional information from its databases or external tools. The system 150 might also return to the user interface 28 to ask the human user to provide relevant information.

A worker of skill in this art would recognize that the strip coating step would mean stripping the turbine blade in question to a base material. The inspection step would include inspection of the turbine blade for any defects that are present. The material deposition step would include depositing material to repair the defects. The coating step would include providing a new coating to protect the turbine blade such as against hot gas corrosion.

While a method step is disclosed, any number of other tasks can benefit from this disclosure. In addition, while specific operations for the robot are disclosed, any number of other operations can occur, including bin picking, manipulation of objects, human/robot collaboration and any number of other processes.

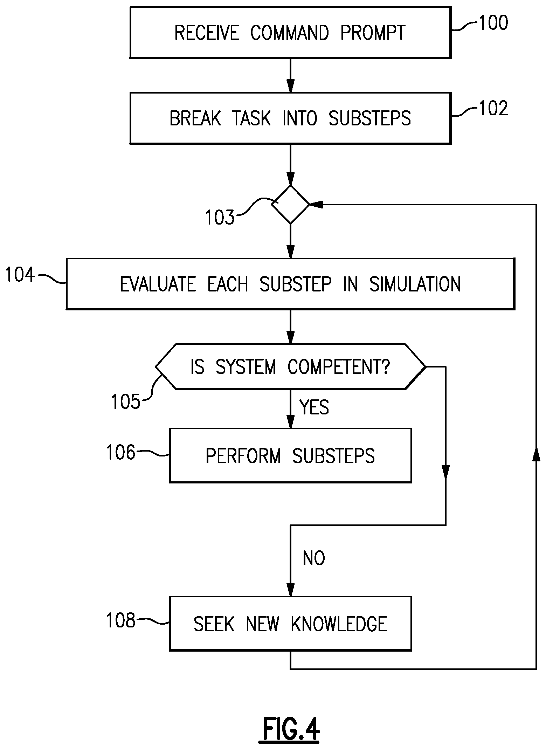

Figure 4 is a flow chart of a method according to this disclosure. At step 100 a command prompt is received. That command prompt is then broken into sub steps at step 102. A node 103 then communicates with a step 104 that evaluates each sub step in simulation. If a determination is made for a sub step that the system is confident, at step 105, then the sub step is performed at step 106. However, if step 105 results in a determination that the system is not competent, then new knowledge is sought at step 108. The new knowledge may be stored information (e.g., in a database or repository), information from the internet, a query back to the operator, or any number of other sources. After the new knowledge has been obtained, the method returns to node 103, and simulates the sub step with the new knowledge. Steps 105, 106 and 108 then occur again dependent on the determination in step 105.

Simulation is also used for grounding natural language instructions (symbols) into the physical world and the robot embodiment. This step maps words in the context of the physical world and robot embodiment.

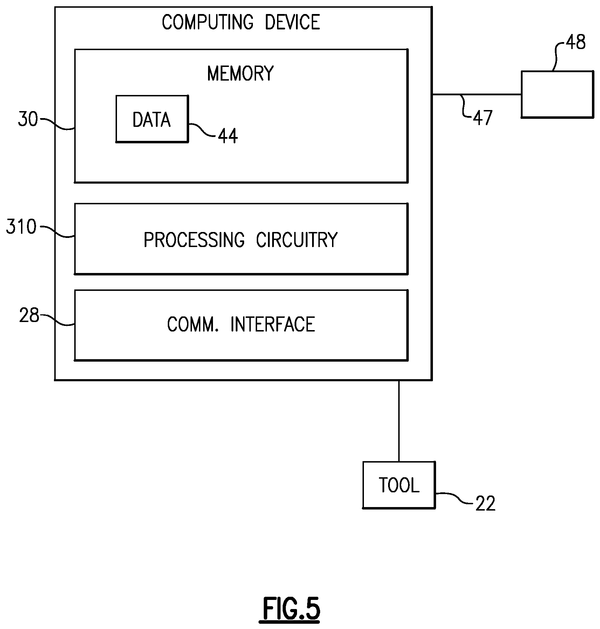

Figure 5 shows a computing device which may be operable to perform methods according to this disclosure.

The computing devices includes processing circuitry 310 which is operably connected to a memory 30. The memory 30 may include the data 44 as shown. Also, the computing device has access through line 47 to the internet 48. The processing circuity 310 may include one or more microprocessors, microcontrollers, application specific integrated circuits, or the like, for example. Of course, there would also be a machine learning module and in particular a large language module in one embodiment. The processing circuitry 310 may be configured to implement any of the methods or processes discussed above. The memory 30 can include any one of a combination of volatile memory elements, (e.g., ramp and access memory (RAM), such as DRAM, SARM, SDRAM, VRAM, etc.) and/or non-volatile memory elements (e.g., ROM, hard drive, tape, CD/ROM, etc.) Moreover, the memory may incorporate electronic, magnetic, optical and/or other types of storage media. The memory 30 can also have its distributed architecture wherein various components are situated remotely from another, but can be accessed by the processor 310.

A system for controlling a tool under this disclosure could be said to include a tool operable to perform tasks. A control for the tool includes processing circuitry for using machine learning to improve operation of the tool, and has access to a memory with stored data. The processing circuitry is operable to communicate with a user interface. The user interface is operable to provide a prompt for a desired action to the control. The control is operable to break the received prompt into a plurality of sub-steps, communicate with the stored data, and make a determination as to whether the control is competent to perform each of the sub-steps. The control is operable to control the tool to perform one of the sub-steps if it has determined it is competent and to communicate to other information if it determines it is not competent to perform any others of the sub-steps.

A method for controlling a tool under this disclosure could be said to include providing a tool operable to perform tasks. The tool is controlled through processing circuitry and uses machine learning to improve control of the tool, and has access to a memory with stored data. A prompt in a user interface is provided for a desired action to the control. The control is operable to break the received prompt into a plurality of sub-steps, communicate with the stored data, and make a determination as to whether the control is competent to perform each of the sub-steps. The tool is controlled to perform one of the sub-steps if it has determined it is competent and to communicate to other information if it determines it is not competent to perform any other of the sub-steps.

While embodiments have been disclosed above, a worker of ordinary skill in this art would recognize that modifications may be made without departing from the scope of the invention as defined by the appended claims. For that reason, the following claims should be studied to determine true scope .

## Claims

1. A system for controlling a tool comprising:
a tool operable to perform tasks;
a control for the tool including processing circuitry for using machine learning to improve operation of the tool, and having access to a memory with stored data;
the processing circuitry operable to communicate with a user interface, and the user interface being operable to provide a prompt for a desired action to the control, the control being operable to break the received prompt into a plurality of sub-steps, communicate with the stored data, and make a determination as to whether the control is competent to perform each of the sub-steps; and
the control being operable to control the tool to perform one of the sub-steps if it has determined it is competent and to communicate to other information if it determines it is not competent to perform any others of the sub-steps.

2. The system as set forth in claim 1, wherein the control includes a large language model.

3. The system as set forth in claim 2, wherein an autonomous agent is operable to communicate with the large language model.

4. The system as set forth in claim 2 or 3, wherein the tool is a robot.

5. The system as set forth in any of claims 2 to 4, wherein the large language model is operable to break the task into the plurality of sub-steps.

6. The system as set forth in any of claims 2 to 5, wherein a simulation tool is operable to receive a proposed action from the large language model once the control has queried the other information to determine a proposed way to perform the sub-step for which the control has determined it lacks competency, and to communicate with the autonomous agent to perform the step if the simulation tool indicates that a satisfactory result would be achieved.

7. The system as set forth in any preceding claim, wherein the system is operable to communicate back to the user interface to ask additional information should its contact with the other information does not provide an adequate result for the step where it has been determined to lack competency.

8. A method for controlling a tool comprising:
providing a tool operable to perform tasks;
controlling the tool through processing circuitry and using machine learning to improve control of the tool, and having access to a memory with stored data;
providing a prompt in a user interface for a desired action to the control, the control being operable to break the received prompt into a plurality of sub-steps, communicate with the stored data, and make a determination as to whether the control is competent to perform each of the sub-steps;
controlling the tool to perform one of the sub-steps if it has determined it is competent and to communicate to other information if it determines it is not competent to perform any other of the sub-steps.

9. The method as set forth in claim 8, wherein the control includes a large language model.

10. The method as set forth in claim 9, wherein an autonomous agent communicates with the large language model.

11. The method as set forth in claim 9 or 10, wherein the tool is a robot.

12. The method as set forth in any of claims 9 to 11, wherein the large language model breaks the task into the plurality of sub-steps.

13. The method as set forth in any of claims 9 to 12, wherein a simulation tool receives a proposed action from the large language model once the control has queried the other information to determine a proposed way to perform the sub-step for which it has determined it lacks competency, and to communicate with the autonomous agent to perform the step if the simulation tool indicates that a satisfactory result would be achieved.

14. The method as set forth in any of claims 9 to 13, further comprising communicating back to the user interface to ask additional information should contact by the control with the other information does not provide an adequate result for the sub-step where the control has been determined to lack competency.
